(19) Europäisches Patentamt
European Patent Office
Office européen des brevets

(11) Publication number: 0 162 059 B1

(12) # EUROPEAN PATENT SPECIFICATION

(45) Date of publication of patent specification: **28.12.88**

(51) Int. Cl.$^4$: **D 21 C 11/04**

(21) Application number: **84903891.4**

(22) Date of filing: **23.10.84**

(86) International application number: **PCT/FI84/00078**

(87) International publication number: **WO 85/01966 09.05.85 Gazette 85/11**

(54) **METHOD FOR CAUSTICIZING GREEN LIQUOR IN AN ALKALINE PULPING PROCESS.**

(30) Priority: **25.10.83 FI 833905**

(43) Date of publication of application: **27.11.85 Bulletin 85/48**

(45) Publication of the grant of the patent: **28.12.88 Bulletin 88/52**

(84) Designated Contracting States: **DE FR SE**

(56) References cited:
**SE-C- 360 129**
**US-A-1 815 646**
**US-A-2 552 183**
**US-A-4 236 960**
**US-A-4 302 281**

**Tappi 36 (1953), Technical Section, p. 147-151, D.C. Gillespie "Some Notes on Current Recausticizing Practice, See figure 3.**

**The file contains technical information submitted after the application was filed and not included in this specification**

(73) Proprietor: **OY PARTEK AB**
**SF-21600 Parainen (FI)**

(72) Inventor: **LEIRITIE, Markku**
**Jenkkapolku 1**
**SF-21600 Parainen (FI)**
Inventor: **SUNDSTRÖM, Christer**
**Hurtinkatu 11 C 17**
**SF-20600 Turku 60 (FI)**
Inventor: **DAHLBERG, Kjell**
**Brunnshöjden 1 A4**
**SF-21600 Parainen (FI)**
Inventor: **JANSSON, Göran**
**Falkvägen 7**
**S-23010 Skanör (SE)**

(74) Representative: **Haigh, Charles Roy et al**
**J.A. KEMP & CO. 14 South Square Gray's Inn**
**London WC1R 5EU (GB)**

**EP 0 162 059 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method for causticizing green liquor in an alkaline pulping process, advantageously in a sulphate process.

In the alkaline pulping process, the sulphate process, part of the chemicals are recovered and to a large extent reused with the process economy in view. After cooking of the wood pulp black liquor is obtained, which is treated and becomes green liquor. The green liquor contains largely sodium carbonate, sodium sulphide and sodium sulphate. As the sodium carbonate is not active in the pulping process, it must be converted to active sodium hydroxide before the liquor can be used in the pulping process. The green liquor is accordingly treated with calcium hydroxide in order to convert the sodium carbonate to sodium hydroxide so far as is possible.

The sulphate process also includes a lime sludge reburning stage, in which calcium carbonate (lime sludge) from the causticizing process is burned to calcium oxide and carbon dioxide. The calcium oxide (kiln lime) is then reused in the causticizing process after being hydrated to calcium hydroxide. On the addition of calcium oxide to green liquor in a lime slaker the lime reacts with the water present in the green liquor developing heat, so that calcium hydroxide is obtained according to the reaction:

$$CaO+H_2O=Ca(OH)_2+heat$$

The calcium hydroxide and sodium carbonate are thereafter brought to react with each other in a causticizing vessel, so as to obtain the desired sodium hydroxide and calcium carbonate. The reaction follows the formula given below:

$$Ca(OH)_2+Na_2CO_3=CaCO_3+2\ NaOH$$

The lime sludge is filtered out, washed and stored to be subsequently burned and returned to the process as calcium oxide. The white liquor obtained is fed to the cooking stage. The conventional causticizing process follows in principle the block diagram which is illustrated in Figure 1.

In one variation of the known process, described in United States Patent No. 1815646 (Bates et al) the green liquor is contacted with the lime in countercurrent flow in two or more stages, the lime sludge from the final causticizing stage being reused in an earlier stage. This is said to make it possible to use only a little more than the theoretical equivalent of lime. In another variant described in United States Patent No. 4302281 problems caused by the build-up of silica and alumina compounds in the green liquor are avoided by keeping the concentration of the green liquor at only 110±20 g/l total titratable alkali (compared by the usual level stated to be 160±20 g/l) and causticizing to a level of 91±3%. If the causticization is then carried out in two stages and the lime sludge from one stage is discarded, the level of unwanted silica and alumina compounds is kept low. Neither of these known processes is concerned with the problem of producing efficiently white liquor having a concentration of 140—180 g/l total titratable alkali with a causticity of 84—90%.

The causticization reaction is a chemical equilibrium, for which the equilibrium constant is defined as the square of the hydroxide concentration divided by the carbonate-ion concentration, viz.

$$K=\frac{(OH^-)^2}{(CO_3^{2-})}$$

The magnitude of the constant indicates how far the reaction can be taken. The parameters which affect the magnitude of the constant include the composition and temperature of the liquor. It has been established that the equilibrium constant decreases very rapidly as the total alkali concentration in the liquor increases.

According to the standard method SCAN-N 2:63 the components in the green and white liquors of the sulphate process are expressed in terms of grammes NaOH per $dm^3$ of liquor. The following definitions apply:

Total titratable alkali=$NaOH+Na_2S+Na_2CO_3$

Active alkali=$NaOH+Na_2S$

Effective alkali=$NaOH+\frac{1}{2}\ Na_2S$

$$Causticity=\frac{NaOH}{NaOH+Na_2CO_3}\times 100\%$$

$$Sulphidity=\frac{Na_2S}{NaOH+Na_2S}\times 100\%$$

In the conversion of green liquor to white liquor by causticizing it is desirable from the point of view of process economy to optimize the concentration of the sodium hydroxide which is active in the pulping process. This means that one should establish process conditions which shift the reaction equilibrium as far as possible to the right so as to achieve a high value for the causticity of the white liquor. With respect to the equilibrium conditions it is possible to achieve the causticity values which are given in Figure 2 (Mixerikompendium II, SPCI:s mixerisymposium 1982).

For white liquors in the sulphate process the content of titratable alkali usually varies in the range 140—180 g NaOH/$dm^3$, which means that it should be possible to achieve a value for causticity in the range 84—90%. For white liquors produced by conventional processes, however, typical causticity values vary in the range of only 77—82%.

There are many reasons why satisfactory

values for the causticity of white liquor are not achieved, including variation in the quality of the kiln lime which makes exact dosing difficult. The lime should have a high content of available calcium oxide but low contents of residual carbonate and impurities. The reactive properties of kiln lime vary depending on the varying operating conditions during the lime-sludge reburning. Also variations in the composition of the green liquor influence the result of the causticizing.

The present invention has as its purpose the elimination of the drawbacks of prior-known causticizing processes and the provision of a simple and efficient causticizing method yielding a more active white liquor than obtained by conventional causticizing processes.

It has been possible to achieve this in a very satisfactory manner according to the present invention with a method for causticizing green liquor to produce white liquor having a concentration of 140 to 180 g/l total titratable alkali calculated as NaOH in an alkaline pulping process by treating said green liquor with lime in two stages to form white liquor and lime sludge, characterized in that the said green liquor is treated first with kiln lime, and then, with or without separation of the lime sludge so formed, secondly with raw lime or other lime of better causticizing quality than the kiln lime and the lime sludge so formed is separated to produce white liquor having a causticity of 84 to 90%.

The causticizing method of the invention differs from the conventional method in that causticizing is performed in one or several consecutive stages, in which both kiln lime and fresh raw lime are employed with a view to forcing the causticizing reaction to a high level resulting in a more active white liquor with a higher concentration of sodium hydroxide. In contrast to conventional processes large quantities of raw lime are employed to produce the desired liquor and as a consequence a quantity of the lime sludge formed has to be removed from the process system which has the effect of diminishing the consumption of energy in the reburning of lime sludge.

The various stages comprised in the process can themselves be divided into one or more substages. In the first stage of causticizing kiln lime is added. This is slaked and reacts with the sodium carbonate in the green liquor giving rise to a lime suspension. The precausticized white liquor obtained is thereafter treated with fresh raw lime. Thus causticizing continues in this subsequent stage in which fresh raw lime is added to the liquor, slaked and reacts with the remaining unconverted sodium carbonate. The lime sludge formed is separated from the white liquor and the white liquor, now with increased sodium hydroxide content and causticity, is led to the pulping process.

If the lime sludge from the primary causticizing and the lime sludge from the secondary causticizing are separated separately, then the latter lime sludge, in which some unreacted calcium hydroxide may remain, can be returned to the primary causticizing stage in order to obtain optimal utilization of the lime which thereby replaces part of the kiln lime.

The principle of the causticizing method of the invention follows the block diagram illustrated in Figure 3a and 3b.

In Figure 3a the process of the invention is divided into two stages so that the lime sludge which is formed during the primary causticizing is separated from the pre-causticized white liquor before the latter is treated in the secondary causticizing stage. Hereby the raw lime added can be utilized optimally since after the secondary causticizing stage it can be separated from the white liquor and returned to the primary causticizing stage. In Figure 3b the primary and secondary causticizing are carried out in a single stage without the lime sludge which is formed during the primary causticizing being separated prior to the secondary causticizing. As a consequence the lime sludge can be separated in only one stage.

The method of the invention provides material advantages in comparison with prior-known processes. Advantages which have a direct effect on the process economy include the following:

Considerable energy savings in respect of the liquor evaporation and the circulation of chemicals as a whole as a result of the increased causticity of the white liquor.

Reduced circulation of lime through the lime reburning kiln, resulting in a reduction in the energy required in the lime reburning stage per ton of pulp.

Reduced energy consumption in the cooking process because of the higher temperature of the white liquor which is a result of the heat of reaction given off in the hydration of the lime.

Operating costs can be lowered and reliability increased since there is a reduction in the overdosage of kiln lime, which also results in an increase in the efficiency of the conventional part of the sulphate process.

Return of the lime sludge from the secondary causticizing stage to the primary causticizing stages gives some increase in the causticizing power of the combined lime mixture.

Easier separation of white liquor and at the same time a reduction in the proportion of calcium carbonate carried with the white liquor.

Saving in chemical consumption since there is a reduction in refresher chemicals because of the lower sodium losses.

The content of undesirable chemicals which accumulate in the lime circulation is reduced.

Increased pulp production capacity where the capacity of the lime reburning kiln or the capacity of the chemical circulation limits the pulp production of the plant.

The invention is described in greater detail in the following.

The causticizing process (unlike conventional processes) is carried out in one or more stages in such a fashion that the relation between the kiln lime and raw lime added is materially different.

The description relates primarily to a process divided into two stages and which thus comprises a primary causticizing stage and a secondary causticizing stage. It is not, however, necessary for the invention that causticizing is performed in two separate stages, i.e. with intermediate separation of the partially causticized white liquor, the essential feature being that the quantities of kiln lime and raw lime are appreciably different from the practice in conventional processes.

The first causticizing stage, primary causticizing, is performed in conventional apparatus, usually in a series of causticizing reactors, in which the green liquor and kiln lime are allowed to react. The inflowing green liquor has a temperature of approx. 90—100°C and contains titratable alkali in a concentration of approx. 140 g $NaOH/dm^3$. The kiln lime usually has a causticizing power of 70—80% and is fed into the green liquor whereon the lime is hydrated.

In contrast to conventional processes it is not necessary in the primary causticizing stage to add a surplus of kiln lime for the causticizing reaction, but on the contrary it is advantageous to add not more than the stoichiometric amount of lime so as to achieve a causticity of approx. 70—76% in the white liquor produced. The causticizing can be performed according to conventional methods at atmospheric pressure or at a somewhat elevated pressure. In order to avoid an excessively long reaction time the causticizing reactors should be equipped with powerful stirrers, so that the reaction can proceed rapidly.

A reaction time of approx. 4h is required for causticizing, but in principle it can be stopped once a suitable degree of reaction has been attained. In addition to kiln lime also lime sludge, which has been separated from the white liquor in the secondary causticizing stage and which can contain unspent lime, can be added to the green liquor in the primary causticizing stage with a view to optimal utilization of the raw lime introduced into the process.

When primary causticizing has been performed the second causticizing stage can be begun directly or alternatively the lime sludge can first be separated out from the precausticized white liquor. In the latter case the suspension is pumped to a conventional separator apparatus which usually comprises a thickener and a filter. In comparison with conventional processes sludge separation is easier, since the sludge is more homogeneous and contains a lower concentration of unspent calcium hydroxide as a consequence of the lime dosing principle. After separation of the lime sludge the white liquor obtained is pumped to the secondary causticizing stage. The sludge is washed and the wash water containing alkali can be returned to the process according to conventional technology.

The second causticizing stage, secondary causticizing, can be carried out in the same type of apparatus as the primary causticizing, i.e. a series of causticizing reactors which are equipped with stirrers. In this stage too causticizing can be carried out at atmospheric pressure or elevated pressure. In this stage, unlike the primary causticizing stage, fresh raw lime is employed for causticizing. The raw lime is added to the white liquor from the primary causticizing either directly, in which case hydration takes place in the causticizing reactor, or indirectly so that the lime is first hydrated in a lime slaker and the suspension then fed into the causticizing reactor.

The pre-causticized white liquor entering the process can have a causticity of 70—76%, which is the most advantageous for the process from the viewpoint of economy, but the causticizing method can also be carried out with precausticized white liquors having other values of causticity.

Following the primary causticizing the white liquor will contain unreacted sodium carbonate equivalent to approx. 24—30% of the original sodium carbonate in the green liquor. The raw lime input to the secondary causticizing should preferably be of good quality with a high value of causticizing power. Raw lime with a causticizing power of 85—95% is suitable for the secondary causticizing process.

Depending on the value of the causticizing power of the raw lime and on the causticity of the incoming pre-causticized white liquor, a lime dosage can be calculated so that a white liquor of high causticity can be obtained. When the precausticized white liquor, which usually has a temperature of approx. 85—90°C, is mixed with the raw lime there is a temperature rise of approx. 2—6°C for the suspension as a consequence of the heat of reaction which is given off in the hydration of the lime.

The secondary causticizing can be carried out in one or more stages in a reactor system. The reaction generally requires approx. 2—5 h before equilibrium is attained. In the secondary causticizing a value for the causticity of the white liquor is obtained which is in the range 85—90% in the immediate neighbourhood of the equilibrium curve for the causticizing reaction.

The suspension obtained is thereafter fed into a conventional separator apparatus for separation of the lime sludge. If the lime sludge from the primary causticizing has been separated the sludge content of the suspension is very low, so that a thickening of the suspension is advisable before e.g. filtering is carried out.

Depending on the use which is intended for the lime sludge the sludge can be washed to various degrees of purity with water. If the lime sludge, which depending on the degree of reaction may contain some proportion of unspent lime, is to be returned to the primary causticizing then the alkali content is not a decisive factor so that the sludge can be washed sparingly or not at all.

The white liquor after being freed from solid particles can be pumped as cooking liquor to the cooking process. By means of the method of the invention the white liquor, since it contains a higher concentration of sodium hydroxide, will be

more active in the cooking than the white liquor employed in current sulphate processes.

Since raw lime is added to the process in very considerable amounts part of the lime sludge which is formed should be separated out from the process before the reburning of lime sludge to kiln lime. This removal of lime sludge also has the effect of removing impurity components which are a source of trouble in various stages of the sulphate process, particularly in the liquor evaporation stage.

In order to further illustrate the invention some examples of causticizing are described in the following.

Example 1

A glass retort with a volume of 0.5 $dm^3$ was immersed in a temperate glycerine bath and 0.4 $dm^3$ of green liquor was added to the flask and heated to 90°C. The green liquor contained 153 g $Na_2CO_3/dm^3$.

To the green liquor was added 26.8 g of kiln lime and the suspension was stirred with a magnetic stirrer. The primary causticizing was stopped after a reaction time of 4 h and the lime suspension was then filtered using a Büchner funnel coupled to a suction pump. The white liquor obtained was analyzed and found to have a causticity of 70.2% and a sulphidity of 31.2%. The content of titratable alkali was 160.4 g $NaOH/dm^3$. 44.2 g of lime sludge was obtained.

Of the pre-causticized white liquor obtained 350 ml of solution was transferred to the empty glass retort and heated to 83°C. To the solution was added 9.2 g fresh raw lime, which had a causticizing power of 89%. After the addition of the lime the temperature of the suspension rose in a few minutes to 91°C as a consequence of the heat of reaction of the hydration of the lime. The secondary causticizing proceeded under stirring for 6 hours and samples for analysis were taken regularly from the suspension. The causticity of the white liquor was determined as a function of the reaction time and the following results were obtained: 0.5 h, 80.7%; 1.0 h, 82.2%; 2.0 h, 83.6%; 3.0 h, 84.6%; 6.0 h, 85.9%.

After the causticizing was carried out the suspension was filtered. The content of unspent calcium oxide in the lime sludge was found to be 1.7% by analysis. The content of titratable alkali was measured as 168.9 g $NaOH/dm^3$ at the end of the experiment, 7.5 g of lime sludge was obtained.

Example 2

In an experiment similar to that of Example 1 primary and secondary causticizing were carried out with the following parameters changed. In primary causticizing 30.7 g of kiln lime was added to the green liquor, as a result of which the causticity of the liquor increased to 80.5% and its sulphidity was 28.2%. The content of titratable alkali in the white liquor obtained was 164.0 g $NaOH/dm^3$. The primary causticizing yielded 51.1 g lime sludge.

The secondary causticizing was carried out with 322 ml of solution, to which 5.5 g raw lime was added. The temperature then rose from 83°C to 86°C in the suspension. The causticity of the white liquor obtained after 6 hours was 86.0%, its sulphidity 24.7% and content of titratable alkali 158 g $NaOH/dm^3$. The secondary causticizing yielded 9.2 g lime sludge, which contained 7.8% unspent calcium oxide.

Example 3

To a glass vessel with a volume of 5 $dm^3$ was added 4.0 $dm^3$ of green liquor containing 153 g $Na_2CO_3/dm^3$. The solution was heated to 90°C, after which 268 g of kiln lime was added. The temperature of the suspension rapidly rose to 100°C. The primary causticizing was carried out for 4 hours, after which the suspension was filtered. The white liquor obtained had a causticity of 69.0%, sulphidity 31.0% and a content of titratable alkali of 156.4 g $NaOH/dm^3$.

The secondary causticizing was carried out with 3.75 $dm^3$ of solution, to which 104.2 g fresh raw lime was added whereon the temperature of the suspension rapidly rose from 85°C to 90°C. The causticizing power of the lime was 89%. Causticizing was carried out for 5 hours, after which the suspension was filtered. The white liquor obtained had a causticity of 86.2% and sulphidity of 25.0%. The secondary causticizing yielded 147 g of lime sludge.

Example 4

A glass retort with a volume of 0.5 $dm^3$ was immersed in a temperate glycerine bath and 0.4 $dm^3$ of green liquor was added to the retort and heated to 90°C. The green liquor contained 153 g $Na_2CO_3/dm^3$. To the green liquor was added 26.5 g of klin lime for primary causticizing. After 4 hours reaction under stirring a sample was taken from the suspension for analysis, whereon it was found that the liquor had a causticity of 72.3%, sulphidity 29.3% and a content of titratable alkali of 181.6 g $NaOH/dm^3$. Without filtering off the lime sludge formed 5.9 g of fresh raw lime was added to the suspension. The causticizing power of the raw lime was 89%. The temperature of the suspension then rose rapidly from 85°C to 87.5°C as a consequence of the heat of reaction from the slaking of the lime. The secondary causticizing proceeded under stirring for 3 hours and samples of the suspension were taken for analysis. The causticity of the white liquor was determined as a function of the reaction time and the following results were obtained: 0.5 h, 82.9%; 1.0 h, 83.8%; 2.0 h, 84.3%; 3.0 h, 84.9%. After the causticizing was performed the suspension was filtered. The amount of sludge obtained was 54.3 g and its content of unspent calcium oxide was 0.06% after washing with 1.0 $dm^3$ of water. The content of titratable alkali in the white liquor was 169.6 g $NaOH/dm^3$.

**Claims**

1. A method for causticizing green liquor to produce white liquor having a concentration of 140 to 180 g/l total titratable alkali calculated as NaOH in an alkaline pulping process by treating said green liquor with lime in two stages to form white liquor and lime sludge, characterized in that the said green liquor is treated first with kiln lime, and then, with or without separation of the lime sludge so formed, secondarly with raw lime or other lime of better causticizing quality than the kiln lime and the lime sludge so formed is separated to produce white liquor having a causticity of 84 to 90%.

2. A method according to claim 1 characterized in that the amount of kiln lime used is not more than the stoichiometric amount in relation to the sodium carbonate content of the green liquor.

3. A method according to claim 1 or 2 characterized in that at least part of the lime sludge is reburned to form klin lime and reused in the first treatment.

4. A method according to claim 1, 2 or 3 characterized in that the lime sludge from the treatment with kiln lime is separated before the treatment with raw lime or other lime of better causticizing quality than the kiln lime, and the lime sludge from the second treatment is recycled, with or without washing, to the first treatment.

**Patentansprüche**

1. Ein Verfahren zur Kaustifizierung von Grünlauge zur Gewinnung von Abfallauge mit einer Konzentration von 140 bis 180 g/l an titrierfähigem Gesamtalkali, berechnet als NaOH, in einem alkalischen Kochverfahren durch Behandlung der Grünlauge mit gebranntem Kalk in zwei Stufen, um Abfallauge und Kalkschlamm zu bilden, dadurch gekennzeichnet, daß die Grünlauge erstens mit Brennofenkalk behandelt wird und dann zweitens, ohne oder mit Abtrennung des so gebildeten Kalkschlamms, mit Rohkalk oder anderem Kalk besserer Kaustifizierungsqualität als der Brennofenkalk, und daß der so gebildete Kalkschlamm zur Gewinnung von Abfallauge mit einer Kaustizität von 84—90% abgetrennt wird.

2. Ein Verfahren nach Anspruch 1, dadurch gekennzeichnet, daß die Menge an verwendetem Brennofenkalk nicht grösser als die stöchiometrische Menge mit Bezug auf den Natriumkarbonatgehalt der Grünlauge ist.

3. Ein Verfahren nach Anspruch 1 oder 2, dadurch gekennzeichnet, daß wenigstens ein Teil des Kalkschlamms zur Bildung von Brennofenkalk erneut gebrannt und bei der ersten Behandlung wiederverwendet wird.

4. Verfahren nach Anspruch 1, 2 oder 3, dadurch gekennzeichnet, daß der Kalkschlamm aus der Behandlung mit Brennofenkalk vor der Behandlung mit dem Roh- oder anderem Kalk besserer Kaustifizierungsqualität als der Brennofenkalk abgetrennt wird, und daß der Kalkschlamm aus der zweiten Behandlung mit oder ohne Waschung in die erste Behandlung rezirkuliert wird.

**Revendications**

1. Procédé pour rendre caustique une liqueur verte afin de produire une liqueur blanche ayant une concentration de 140 à 180 g/l d'alcali titrable total, calculée sur la base NaOH, dans un procédé de pulpage alcalin, en traitant ladite liqueur verte par de la chaux en deux stades pour former une liqueur blanche et des boues de chaux, caractérisé en ce qu'on traite d'abord ladite liqueur verte par de la chaux de four à chaux, puis, avec ou sans séparation des boues de chaux ainsi formées, on la traite ensuite par de la chaux brute ou une autre chaux de meilleur pouvoir caustifiant que la chaux de four, et l'on sépare les boues de chaux ainsi formées pour produire une liqueur blanche ayant une causticité de 84 à 90%.

2. Procédé selon la revendication 1, caractérisé en ce que la proportion de chaux de four utilisée n'est pas supérieure à la proportion stoechiométrique par rapport à la teneur en carbonate de sodium de la liqueur verte.

3. Procédé selon la revendication 1 ou 2, caractérisé en ce qu'on rebrûle au moins une partie des boues de chaux pour former de la chaux de four et on la réutilise dans le premier traitement.

4. Procédé selon la revendication 1, 2 ou 3, caractérisé en ce qu'on sépare les boues de chaux provenant du traitement par la chaux de four avant le traitement par la chaux brute ou une autre chaux de meilleur pouvoir caustifiant que la chaux de four, et l'on recycle les boues de chaux provenant du second traitement avec ou sans lavage, à destination du premier traitement.

Fig. 1

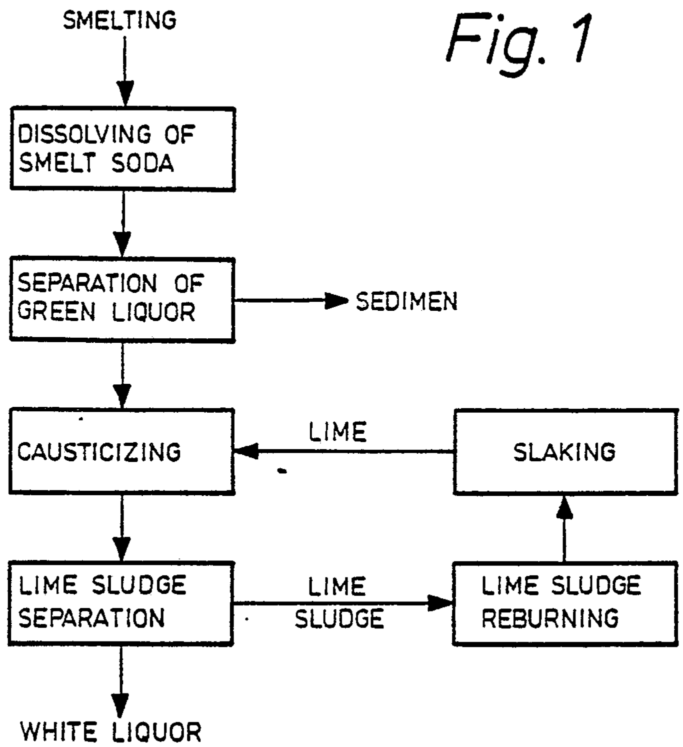
SMELTING
DISSOLVING OF SMELT SODA
SEPARATION OF GREEN LIQUOR
SEDIMEN
CAUSTICIZING
LIME
SLAKING
LIME SLUDGE SEPARATION
LIME SLUDGE
LIME SLUDGE REBURNING
WHITE LIQUOR

Fig. 2

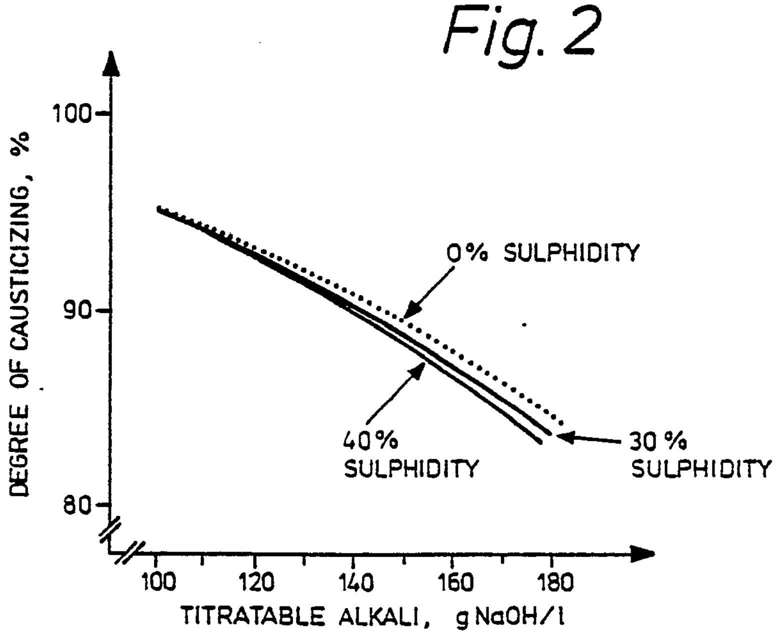
DEGREE OF CAUSTICIZING, %
100
90
80
0% SULPHIDITY
40% SULPHIDITY
30% SULPHIDITY
100
120
140
160
180
TITRATABLE ALKALI, g NaOH/l

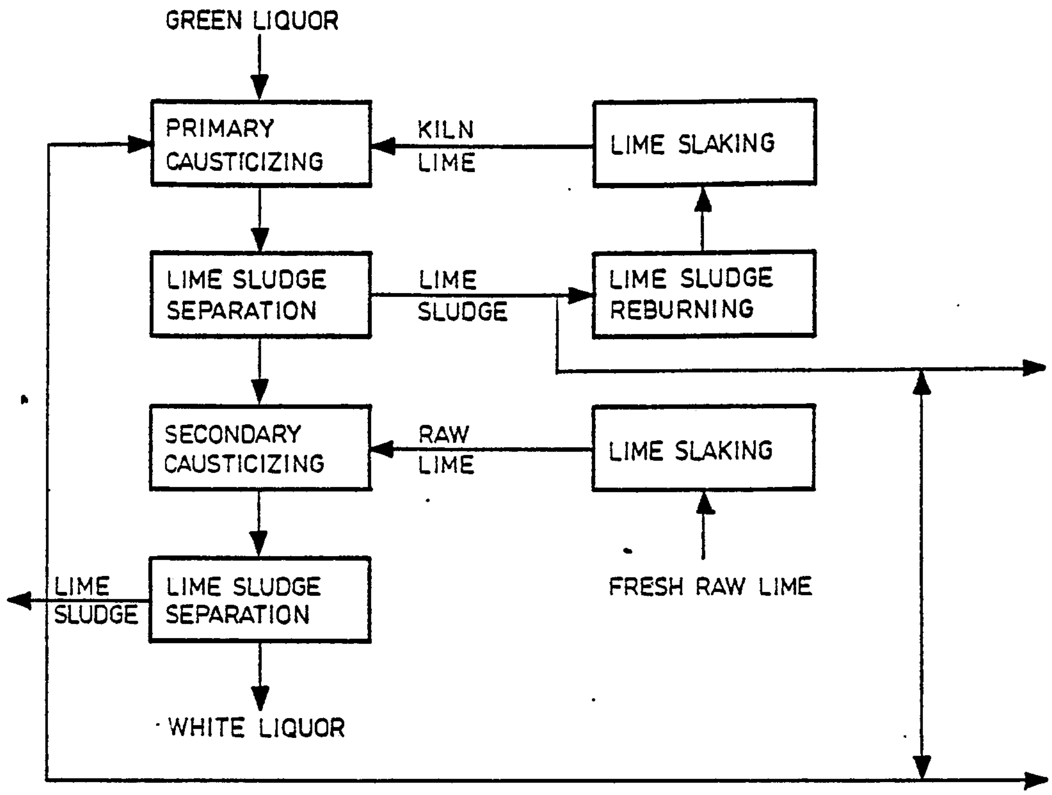
GREEN LIQUOR
PRIMARY CAUSTICIZING
KILN LIME
LIME SLAKING
LIME SLUDGE SEPARATION
LIME SLUDGE
LIME SLUDGE REBURNING
SECONDARY CAUSTICIZING
RAW LIME
LIME SLAKING
FRESH RAW LIME
LIME SLUDGE
LIME SLUDGE SEPARATION
WHITE LIQUOR

Fig. 3 a

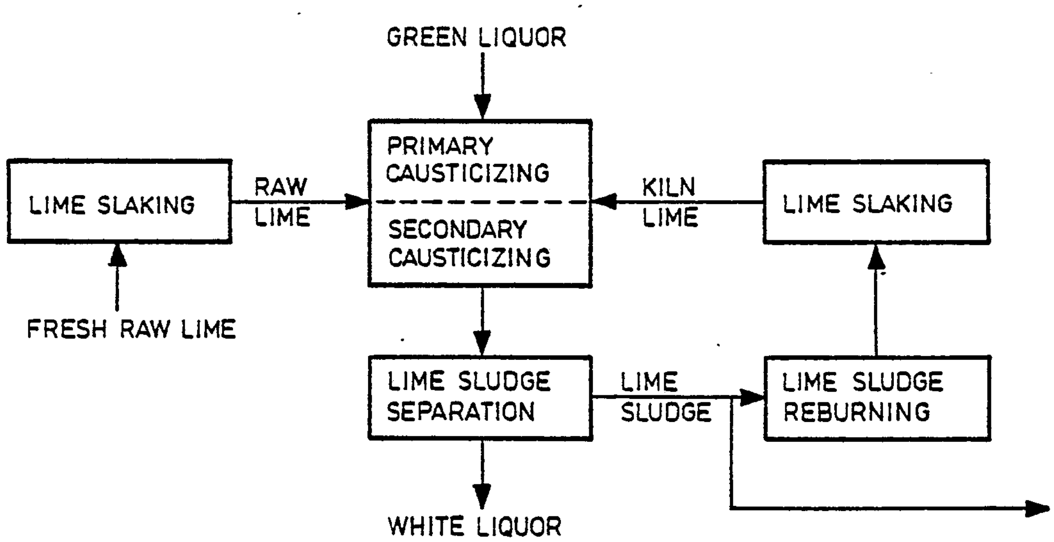
GREEN LIQUOR
LIME SLAKING
RAW LIME
PRIMARY CAUSTICIZING
SECONDARY CAUSTICIZING
KILN LIME
LIME SLAKING
FRESH RAW LIME
LIME SLUDGE SEPARATION
LIME SLUDGE
LIME SLUDGE REBURNING
WHITE LIQUOR

Fig. 3 b